# EUROPEAN PATENT APPLICATION

(11) **EP 1 270 358 A2**
(43) Date of publication of application: **02.01.2003**
(21) Application number: 02254452.2
(22) Date of filing: 26.06.2002
(51) Int. Cl.: B60T 17/22, F16D 66/00

(54) **Method and apparatus for limiting truck speed as a function of braking**

(30) Priority: 29.06.2001 US 302135 P
(71) Applicant: The Raymond Corporation, Greene, New York 13778 (US)
(72) Inventor: Lonzinzki, Richard J., Johnson City, New York 13790 (US); Clasen, Erick, New York 13778 (US); Page, Stephen, New York 13758 (US); Baldini, Augustus R., New York 13903 (US)
(74) Representative: James, Michael John Gwynne

(57) **Abstract**

A method for monitoring the temperature of a friction brake to prevent overheating of the brake is disclosed. The vehicle speed and brake activation time are monitored for braking event conditions known to add heat to the brake or brakes, and the frequency or rate of occurrence of these conditions is monitored. When the frequency of brake event conditions approaches a threshold value known to be approaching an over-temperature condition, the speed of the vehicle is limited in order to limit the amount of kinetic energy which can be absorbed by the brakes, thereby preventing the brakes from overheating.

## Description

### CROSS-REFERENCE TO RELATED APPLICATIONS

This application claims the benefit of U.S. Provisional patent application Serial No. 60/302,135 filed on June 29, 2001 and entitled "Brake Overheating and Mitigation Algorithm".

### BACKGROUND OF THE INVENTION

The present invention is a method for preventing overheating of friction brakes, and more particularly to a method for preventing overheating of spring activated friction brakes used in lift or pallet trucks by limiting the speed of the vehicle.

Industrial material handling vehicles such as lift trucks or pallet trucks are commonly found in warehouses, factories, shipping yards, and, generally, wherever pallets, packages, or loads of goods are required to be moved from place to place. In package picking and delivery applications, it is generally desirable to move as many packages as possible, in as little time as possible, such that packages or pallets can be delivered with a high degree of efficiency. Therefore, lift and pallet trucks are typically operated at a relatively high rate of speed despite the fact that they must be stopped frequently.

Braking systems in material handling vehicles commonly include spring applied friction brakes to provide both service and parking or deadman brake functions. Brakes of this type include frictional brake pad elements which apply a frictional force to rotational wheel elements to bring rotational motion to a stop. As they are applied, these frictional elements convert kinetic energy into heat. Such systems, while providing effective braking, are easily overheated under typical warehouse operating conditions in which, as noted above, lift trucks are operated at a relatively high rate of speed and brakes are applied frequently. Once the brakes are overheated, the lift or pallet truck must be turned off, and the brakes allowed to cool. Overheated braking system, therefore, result in significant vehicle down time and decrease the efficiency of warehousing operations.

Although a number of prior art methods are known for limiting overheating of lift truck braking systems, there are problems associated with each of these methods. One such method, for example, is to oversize the frictional elements of the brake such that the braking system will not overheat even at the maximum attainable repetition rate. While providing the desired result, this solution is both expensive and difficult to implement. In particular, oversized brakes are difficult to package, resulting in significant manufacturing difficulties. Another known method is to force-cool the brake, using a fan or other active cooling device. Again, this method adds cost, size, and manufacturing complexity to the vehicle. Yet another method is to monitor the temperature of one or more of the brake elements using a sensor, and to limit the performance of the truck when a critical temperature is detected. Again, while effective in protecting the brake elements from overheating, this system adds cost and complexity to the vehicle, and can further denigrate overall system reliability.

There remains a need, therefore, for an inexpensive, easy to manufacture method for preventing the overheating of friction brakes in a pallet or lift truck

### SUMMARY OF THE INVENTION

The present invention is a method for preventing overheating of friction brakes in a vehicle. The frequency of brake activation is monitored while the vehicle is in motion, and is compared to a threshold frequency level indicative of an approaching over-temperature condition. When the frequency exceeds the threshold value, the speed of the vehicle is limited to a reduced maximum speed, less than the maximum operational speed, thereby limiting the amount of kinetic energy absorbed during subsequent braking.

A general object of the invention is to define a braking event as a function of an elapsed time of brake activation while the vehicle is traveling above a threshold vehicle speed. Braking events are stored in a braking event log, and a frequency is calculated as a function of braking events over time. When the frequency of braking events exceeds a threshold value, the maximum speed of the vehicle is reduced to limit the amount of kinetic energy which can be added to the brakes as heat.

These and other aspects of the invention will become apparent from the following description. In the description, reference is made to the accompanying drawings which form a part hereof, and in which there is shown a preferred embodiment of the invention. Such embodiment does not necessarily represent the full scope of the invention and reference is made therefore, to the claims herein for interpreting the scope of the invention.

### BRIEF DESCRIPTION OF THE DRAWINGS

Figure. 1 is a block diagram of a lift truck which can be used in conjunction with the present invention;

Figure. 2 is a cutaway view of a spring-activated friction brake employed in the lift truck of Figure 1;

Figure. 3 is a block diagram illustrating a brake control system constructed in accordance with the present invention;

Figure. 4 is a flow chart illustrating a brake monitor function in accordance with the method of the present invention;

Figure 5 is a flow chart illustrating a brake speed limiting function in accordance with the method of the present invention;

Figure 6 is a flow chart illustrating a preferred embodiment of the brake monitor function of Figure 4;

Figure 7 is a flow chart illustrating a preferred embodiment of the brake speed limiting function of Figure 5; and

Figure 8 is a diagram of a braking event log employed in the method of the present invention.

### DETAILED DESCRIPTION OF THE PREFERRED EMBODIMENT

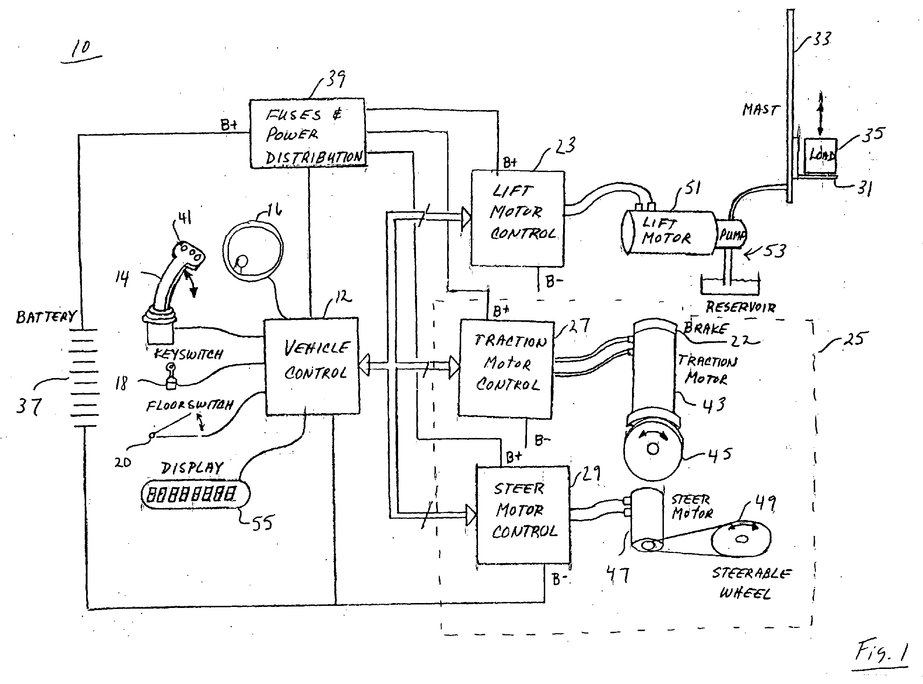

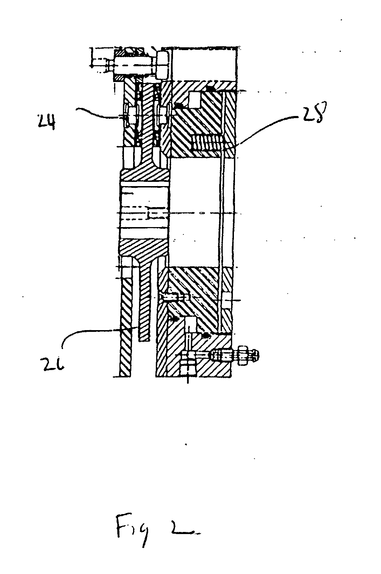

Referring now to Fig. 1, a block diagram of a typical lift truck 10 in which the present invention can be used is illustrated. The lift truck comprises a vehicle control system 12 which receives operator input signals from an operator control handle 14, a steer wheel 16, a key switch 18, and a floor switch 20 and, based on the received signals, provides command. signals to each of a lift motor control 23 and a drive system 25 including both a traction motor control 27 and a steer motor control 29. The drive system provides a motive force for driving the lift truck in a selected direction, while the lift motor control 23 drives forks 31 along a mast 33 to raise or lower a load 35, as described below. The lift truck 10 and vehicle control system 12 are powered by one or more battery 37, coupled to the vehicle control system 12, drive system 25, and lift motor control 23 through a bank of fuses or circuit breakers 39.

As noted above the operator inputs include a key switch 18, floor switch 20, steering wheel 16, and an operator control handle 14. The key switch 18 is activated to apply power to the vehicle control system 12, thereby activating the lift truck 10. The floor switch 20 provides a deadman braking device, disabling motion of the vehicle until the floor switch 20 is activated by the operator, as described below. The operator control handle 14 provides a number of functions. Typically, the handle 14 is rotated in a vertical plane to provide a travel direction and speed command of motion for the lift truck 10. A plurality of control buttons 41 located on the handle 14 can provide a number of additional functions, including lifting and lowering the forks 31, providing a horn, and fork tip up and down functions. A number of other functions could also be provided, depending on the construction and intended use of the lift truck 10.

The traction motor control 27 drives a traction motor 43 which is connected to wheel 45 to provide motive force to the lift truck. The speed of the traction motor 43 and associated wheels is selected by the operator from the operator control handle 14, and is typically monitored and controlled through feedback provided by an encoder or other feedback device coupled to the traction motor 43. The wheel 45 is also connected to friction brake 22 through the drive motor, providing both a service and parking brake function for the lift truck 10. The friction brake 22 is typically spring-activated, and defaults to a "brake on" position. The operator must provide a signal indicating that the brake is to be released, here provided by the floor switch 20, as described above. The traction motor 43 is typically an electric motor, and the associated friction brakes 22 can be either electrically operated or hydraulically operated devices. Although one friction brake 22 is shown, the lift truck 10 can include one or more friction brake 22.

The steer motor control 29 is connected to drive a steer motor 47 and associated steerable wheel 49 in a direction selected by the operator by rotating the steering wheel 16, described above. The direction of the steerable wheel 49 determines the direction of motion of the vehicle. Again, the steer motor 47 is typically a DC electric motor. An encoder or other feedback device is typically coupled to the steer motor, and a signal is provided to the steer motor control 29 to maintain the direction of travel of the lift truck 10 within a predetermined range of the selected direction of motion.

The lift motor control 23 provides command signals to control a lift motor 51 which is connected to a hydraulic circuit 53 for driving the forks 31 along the mast 33, thereby moving the load 35 up or down, depending on the direction selected at the control handle 14. In some applications, the mast 33 can be a telescoping mast. Here, additional hydraulic circuitry is provided to raise or lower the mast 23 as well as the forks 31.

In addition to providing control signals to the drive system and lift control system, the vehicle control 12 can also provide data to a display 55 for providing information to the operator. Displayed information can include, for example, a weight of a load placed on the forks 31, the speed of the vehicle, the time, or maintenance information.

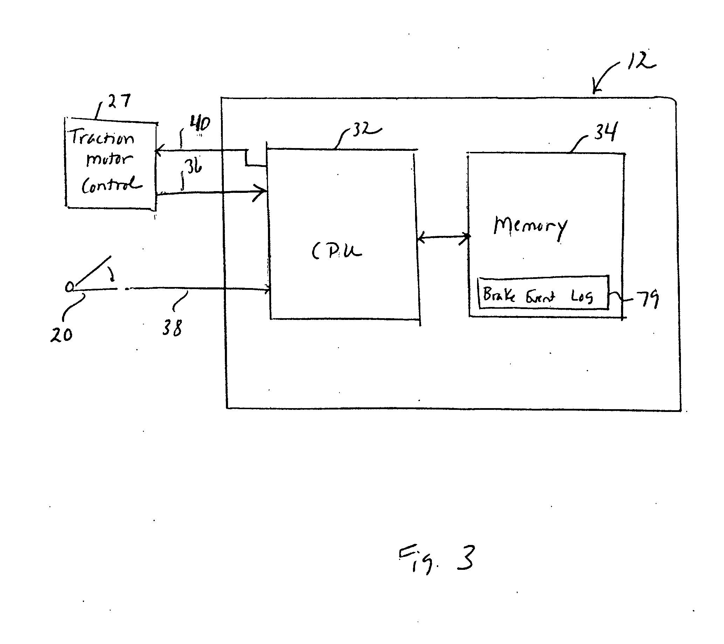

Referring now to Fig. 2, the vehicle brake is a spring-applied friction brake 22 including friction brake pads 24, a brake rotor 26, and one or more spring 28. The spring 28 maintains the brake pads 24 against the brake rotor 26, and the brake 22 therefore defaults to a "brake on" position and is maintained in that position until a force is applied to oppose the spring 28. The applied force can be provided by a hydraulic system, or by an electrical system, such as the brake described in U.S. Patent Number 6,211,590 B1, which is incorporated herein by reference for its description of an electrical braking device. As noted above, the frictional brake pads 24 convert kinetic energy to heat Therefore the amount of heat applied to brakes during brake activation is directly related to the speed of the vehicle as well as to the activation time of the frictional brake pads 24.

Referring to Fig. 3, to prevent overheating of the brake 22, the vehicle control system 12 of the truck 10 monitors braking functions for " braking event" conditions known to cause heating of the brakes. The control system 12 includes a central processing unit 32 which can be, for example, a microprocessor or microcontroller, and an associated memory component 34. Inputs to the central processing unit 32 include a speed feedback signal 36 indicative of the speed of the truck 10, and a braking signal 38, which provides an indication to the central processing unit 32 that the brake 22 is activated. The speed feedback signal 36 is provided by the traction motor control 27 which, as noted above, typically receives a speed signal from an encoder (not shown) electrically coupled to the traction motor of the truck 10. The brake signal 38 is provided by the floor switch 20 which, as noted above, is indicative of activation of the brake 22 of the truck 10. The central processing unit 32 monitors the brake 38 and speed feedback 36 signals for brake events which are written to a brake event log 79 in the memory 34 as described below. Based on the frequency of braking events, the central processing unit 32 limits the speed command signal 40 which is transmitted to the traction motor control 27 of the lift truck vehicle 10 to a selected maximum value, thereby limiting the overall speed of the truck 10 and hence kinetic energy produced, as described below.

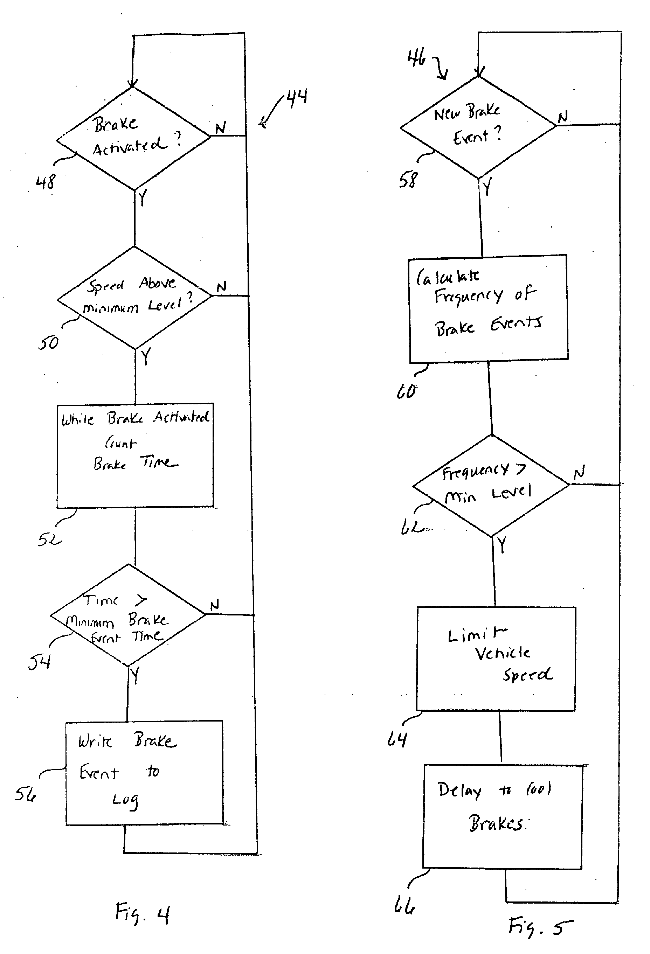

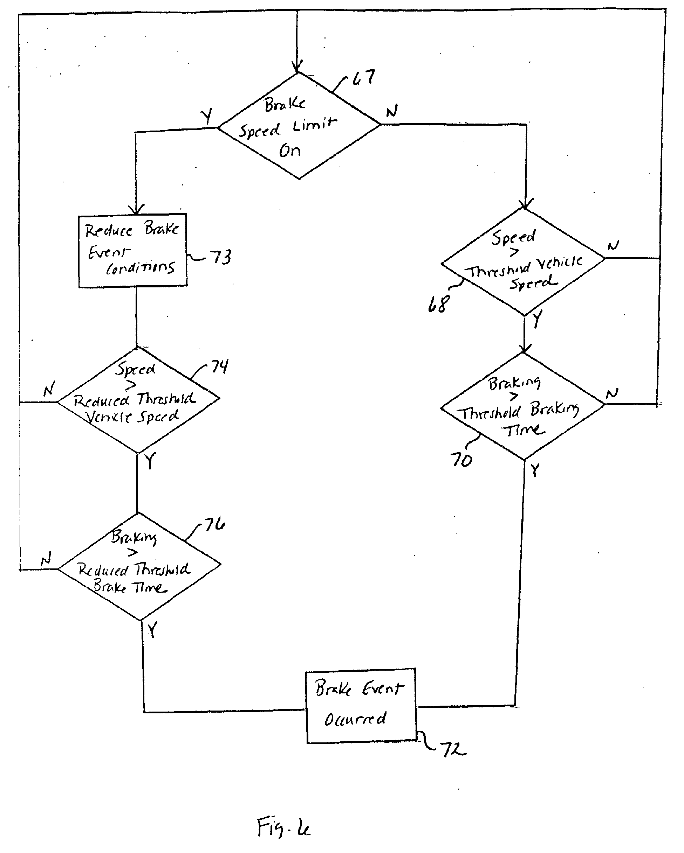

Referring now to Figs. 4 and 5, flow charts illustrating the general process steps employed by the central processing unit 32 (Fig. 3) in monitoring and preventing overheating of the brake 22 are shown. The process generally comprises two main functions: a brake usage monitoring function 44 (Fig. 4), and a brake limit function 46 (Fig. 5). The brake usage monitor 44 monitors use of the brake 22 to determine whether "brake event" conditions which contribute to heating of the brake 22 have occurred, and the brake limit function 46 monitors the frequency of these conditions. When heating conditions occur within a predetermined threshold frequency level, the brake limit function 46 limits the speed of the truck 10, thereby limiting the amount of kinetic energy that can be applied to the brake 22 and preventing the brake 22 from reaching an over-temperature condition. As noted above, although a single brake system has been shown, the lift truck 10 can include more than one brake 22.

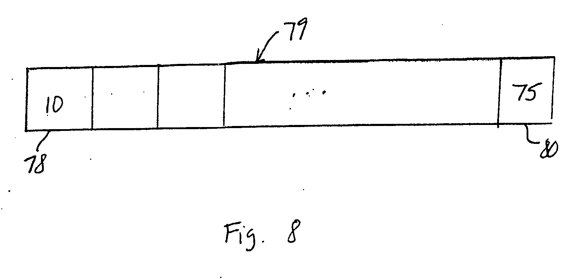

Referring now specifically to Fig. 4, the brake usage monitor 44 monitors the brake signal 38 to determine whether the brake 22 has been activated (process step 48). If the brake 22 is activated, the speed signal 32 is read to determine whether the truck 10 is traveling at or above a threshold value (process step 50). If both conditions are met, the brake usage monitor 44 monitors the brake signal 38 and counts elapsed time until a threshold braking time is met (process step 54). When the threshold braking time has elapsed, the occurrence of a "brake event" is written to a brake event log (Fig. 8), which maintains a count of brake events versus time (process step 56).

Referring now specifically to Fig. 5, in process step 58, the brake limit function 46 monitors the brake event log, and calculates the rate or frequency of brake events (process step 60) as a function of the number of brake events occurring over an elapsed time. If the frequency of braking events exceeds a defined threshold frequency value (process step 62), the potential for an overheating condition exists, and the maximum speed of the truck 10 is limited (process step 64) to a reduced maximum speed. The reduced maximum speed can be maintained for a predetermined delay period selected to allow the brake 22 to cool sufficiently to prevent overheating (process step 66), while still allowing the truck 10 to be used. Alternatively, the reduced maximum speed can be maintained until the truck is turned off for a predetermined period of time. Preferably, as described below, brake events continue to be counted during the limited speed condition, thereby maintaining a continuous indicator of the temperature of the brake.

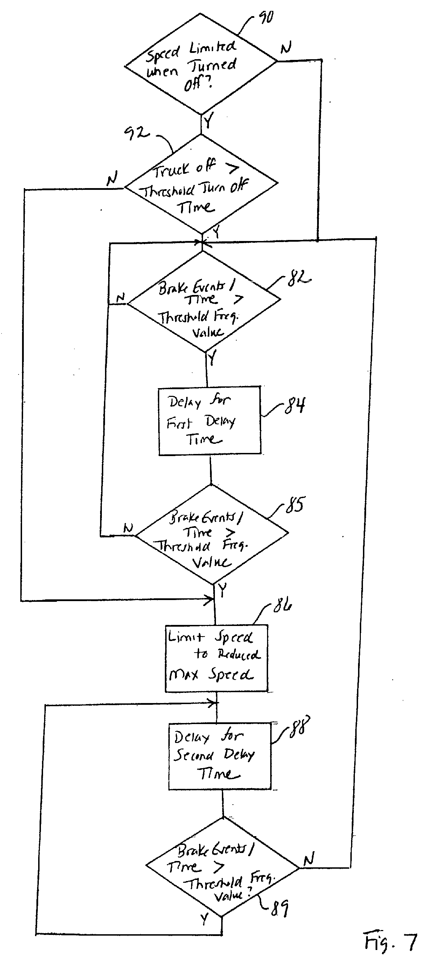

Referring now to Figs. 6 and 7, preferred embodiments of the brake usage monitor 44 and brake limiting function 46 are shown. Here, braking events are logged differently depending on the state of operation of the truck 10, and additional delay steps are instituted to prevent limiting the speed of the truck 10 unnecessarily. Additionally, if the truck 10 is turned off after the speed has been limited, the truck 10 must be turned off for a minimum period of time to allow the brakes to cool before higher speeds are enabled.

Referring first to Fig. 6, the brake usage monitor 44 is shown. Initially, the brake usage monitor 44 determines whether the truck 10 is being operated under normal conditions or under speed limited conditions (step 67). During normal operation, braking events 72 are defined, as described above, when the vehicle speed exceeds a selected threshold speed at the start of braking (step 68), and the brake time exceeds a threshold braking time (step 70). During speed limited operation, when the brake 22 is known to be operating at a heightened temperature and the possibility of an over-temperature condition is therefore increased, the threshold vehicle speed and/or braking time for a braking event 72 are reduced (step 73), and braking events 72 are continued to be monitored as shown in steps 74 and 76. Referring now to Fig. 8, under either set of operating conditions, when brake events 72 occur, they are written to the brake event log 79 which here comprises an array for storing successive brake events and associated time stamps, wherein the time stamp is a function of the amount of elapsed time since the truck 10 was turned on.

Referring now to Fig. 7, to determine whether vehicle speed should be limited, the frequency of braking events is initially calculated (step 82) by determining whether the time difference between the first brake event 78 and the last brake event 80 in the log 79 (Fig. 8) is less than a defined time period, thereby exceeding a threshold frequency value. If so, a first delay is instituted (step 84) and, at the end of the delay, the frequency is again calculated (step 85) to determine whether, in fact, an over-temperature condition is approaching. The delay of step 84 therefore provides a check of the brake conditions and prevents limiting the speed of the truck 10 unnecessarily. If braking has continued at above the defined threshold frequency value, the speed of the truck 10 is limited to a reduced maximum speed (step 86), and a second delay (step 88) is instituted in order to allow the brakes to cool and/or to limit the introduction of additional heat into the brake 22. After the second delay period, the frequency of braking events 72, which here are a function of the reduced threshold values described above, is again checked (step 89) and, if the frequency of braking events exceeds the threshold frequency value, the speed of the truck continues to be limited to the speed to the reduced maximum speed. If the frequency does not exceed the threshold frequency value, brake usage has been sufficiently light to allow the brakes to cool, and the brake limit function 46 discontinues the speed limit.

Referring still to Fig. 7, on start up of the truck 10, an initial check is made to determine whether the truck 10 was in a speed limited mode when the key switch 18 was turned off (step 90). If so, the turn off time from the key switch "off" to the key switch "on" is calculated (step 92) and compared to a threshold turn off time value. If the turn off time exceeds the threshold value, the brake 22 is assumed to be cooled, and the truck 10 is allowed to operate at normal operational speeds. If the turn off time does not exceed the threshold off time value, the speed of the truck is again limited to the reduced maximum speed. Therefore, an operator cannot override the speed limit by turning the key switch off and restarting the truck 10.

Using an electric spring-activated friction brake such as the brake disclosed in U.S. Patent Number 6,211,590 B1, threshold values for the method described with reference to Figs. 6 and 7 above were derived based on data relating temperature rise of the friction brake versus time of brake activation. The values were selected to maintain the brake 22 beneath the maximum temperature provided in Underwriters Laboratories specification 583 section 22.1. For this embodiment, a brake event 72 under normal operating conditions is defined as a brake time of one and one half seconds at a vehicle speed exceeding five miles per hour. Under speed limited conditions, the braking event is instead defined as a brake time of one second at a speed exceeding three miles per hour. For the brake limiting monitor 46, the threshold frequency value is defined as ten braking events in a two and one half minute period; the first delay is a period of two and one half minutes; the reduced maximum speed is four miles per hour; the second delay is a period of five minutes; and the turn off time is also a period of five minutes. These selected threshold values can be varied, depending on the selected brake, brake construction, vehicle speeds, expected maximum temperatures and other operational and construction factors. Furthermore, variations can be made to the defined steps to achieve similar results. For example, with reference to Fig. 6, here the definition of a brake event is redefined with a reduced vehicle speed and reduced brake activation time when operating in a speed limited condition. However, similar results can be achieved by maintaining a defined speed and time, and decreasing the frequency threshold.

It should, therefore, be understood that the methods and apparatuses described above are only exemplary and do not limit the scope of the invention, and that various modifications could be made by those skilled in the art that would fall under the scope of the invention. For example, although the invention has been described with reference to a single friction brake 22, as noted above, the lift truck 10 can include more than one friction brake. Furthermore, although a specific method for calculating frequency of brake usage has been described, it will be apparent that frequency can also be calculated as a function of delay times between braking events or in other ways known to those of skill in the art. Furthermore, as noted above, threshold speed brake time, and frequency values have been determined empirically for specific braking conditions. Variations, such as increasing the required vehicle speed and brake time and correspondingly decreasing the frequency threshold values can provide similar results. Additionally, although the present insertion has been described with reference to a lift or pallet truck, the described braking methods can be applied to other types of vehicles and in other applications in which overheating of friction brakes is problematic. To apprise the public of the scope of this invention, the following claims are made:

## Claims

1. A method for preventing overheating of a friction brake in a vehicle, the method comprising the following steps:
(a) monitoring a frequency of brake events;
(b) comparing the frequency to a threshold frequency level indicative of an approaching over-temperature condition; and
(c) limiting the speed of the vehicle to limit the amount of kinetic energy absorbed during braking when the frequency exceeds the threshold value.

2. The method as defined in claim 1, wherein step (a) further comprises the steps of:
(i) monitoring a vehicle speed and comparing the vehicle speed to a threshold speed value; and
(ii) monitoring a brake activation time and comparing the brake activation time to a threshold brake time value; and
(iii) recording an occurrence of a brake event when the vehicle speed exceeds the threshold vehicle speed and the brake time exceeds the threshold brake time.

3. The method as defined in claim 2, further comprising:
(iv) calculating the frequency of brake events as a number of occurrences of a brake event over a selected period of time.

4. The method as defined in claim 2, wherein step (iii) comprises storing a time of occurrence of each brake event in a brake event log.

5. The method as defined in claim 1, wherein step (c) further comprises the steps of:
(i) waiting for a predetermined delay period to allow the brakes to cool while the speed is limited; and
(ii) recalculating the frequency of brake usage; and
(iii) comparing the frequency to the threshold value and continuing to limit the speed of the vehicle if the frequency exceeds the threshold frequency value.

6. The method as defined in claim 1, wherein step (a) further comprises the steps of:
(i) monitoring the frequency of brake events as a function of a first vehicle speed and a first brake activation time during normal operation, and
(ii) monitoring the frequency of brake events as a function of a second vehicle speed and a second brake activation time for speed limited operation when a temperature of the brake is at a heightened value.

7. The method as defined in claim 1, wherein step (c) comprises the steps of:
(i) monitoring a frequency of brake usage while the speed is limited; and
(ii) continuing to limit the speed of the vehicle until the frequency of brake usage falls below the threshold frequency value.

8. A method for preventing overheating of friction brakes in a vehicle, the method comprising the following steps:
(a) monitoring a speed of the vehicle;
(b) comparing the vehicle speed to a vehicle speed threshold;
(c) when the vehicle speed exceeds the threshold vehicle speed, monitoring brake activation and determining a brake activation time;
(d) comparing the brake activation time to a threshold brake time value;
(e) recording a brake event when the brake activation time exceeds the threshold brake time value;
(f) calculating a frequency of braking events;
(g) comparing the frequency of braking events to a threshold frequency value indicative of an approaching over-temperature condition in the brake; and
(h) limiting the maximum speed of the vehicle to limit the amount of heat added to the brake during successive braking when the frequency exceeds the threshold frequency value.

9. The method as defined in claim 8, further comprising the steps of:
(i) adjusting at least one of the threshold brake time, the threshold vehicle speed, and the threshold frequency level to account for the heated condition of the friction brake when the maximum speed is limited; and
(j) continuing to limit the speed of the vehicle until the frequency of braking events does not exceed the threshold frequency value.

10. The method as defined in claim 8 wherein step (h) further comprises the steps of:
i) delaying for a predetermined period of time; and
ii) recalculating the frequency of braking events to verify brake heating conditions before limiting the speed of the vehicle.

11. The method as defined in claim 8 wherein step (e) further comprises the step of storing a time of occurrence of each braking event in a braking event log.

12. The method as defined in claim 8, wherein step (f) comprises calculating a number of braking events over an elapsed time.

13. The method as defined in claim 9, wherein step (i) further comprises the steps of
i) delaying for a period of time to allow the brakes to cool; and
ii) recalculating the frequency before adjusting at least one of the threshold brake time, the threshold vehicle speed, and the threshold frequency level to account for the heated condition of the friction brake when the maximum speed is limited.

14. The method as defined in claim 9, wherein step (i) comprises reducing at least one of the threshold period of time and the threshold vehicle speed.

15. The method as defined in claim 9, wherein step (i) comprises reducing the threshold frequency value.

16. The method as defined in claim 8, further comprising the steps of:
prior to monitoring the vehicle speed, verifying that the speed of the vehicle had been limited when the vehicle was turned off;
calculating the vehicle off time;
comparing the vehicle off time to a threshold off time value representing an amount of time required to allow the brake to cool; and
limiting the speed of the vehicle on start up if the vehicle off time does not exceed the threshold off time value.
